(19) Europäisches Patentamt
European Patent Office
Office européen des brevets

(11) **EP 2 927 569 B1**

(12) **FASCICULE DE BREVET EUROPEEN**

(45) Date de publication et mention de la délivrance du brevet:
**08.05.2024 Bulletin 2024/19**

(21) Numéro de dépôt: **15161662.0**

(22) Date de dépôt: **30.03.2015**

(51) Classification Internationale des Brevets (IPC):
*F21S 43/14* (2018.01)    *B60Q 1/38* (2006.01)
*F21S 43/19* (2018.01)    *F21S 43/237* (2018.01)
*F21S 43/243* (2018.01)    *F21S 43/249* (2018.01)

(52) Classification Coopérative des Brevets (CPC):
**F21S 43/249; F21S 43/14; F21S 43/19;**
**F21S 43/237; F21S 43/243;** B60Q 1/381;
B60Q 2400/20; B60Q 2400/30; G02B 6/002;
G02B 6/0028; G02B 6/0035; G02B 6/0068

(54) **MODULE LUMINEUX D'ÉCLAIRAGE ET/OU DE SIGNALISATION D'UN VÉHICULE AUTOMOBILE**

LEUCHTMODUL ZUR BELEUCHTUNG UND/ODER SIGNALISIERUNG FÜR KRAFTFAHRZEUG

LIGHTING MODULE FOR LIGHTING AND/OR SIGNALLING OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2014 FR 1452858**

(43) Date de publication de la demande:
**07.10.2015 Bulletin 2015/41**

(73) Titulaire: **VALEO VISION**
**93012 Bobigny Cedex (FR)**

(72) Inventeurs:
• **Godbillon, Vincent**
**75011 Paris (FR)**
• **Puente, Jean-Claude**
**93190 Livry Gargan (FR)**

(74) Mandataire: **Valeo Visibility**
**Service Propriété Industrielle**
**c/o Valeo Vision**
**34, rue Saint André**
**93012 Bobigny (FR)**

(56) Documents cités:
EP-A1- 2 161 494    WO-A1-2015/058940
DE-A1- 3 916 875    DE-A1- 4 228 895
DE-A1-102008 025 397    DE-A1-102012 202 508
DE-A1-102012 211 284    DE-A1-102013 221 743
DE-U1-202013 103 655    US-A1- 2007 223 219
US-A1- 2009 073 710    US-A1- 2011 148 280

## Description

La présente invention a trait au domaine de l'éclairage et elle concerne plus particulièrement la conception de modules lumineux aptes à fournir aux véhicules automobiles une fonction de feux diurnes et une fonction d'indicateurs de direction.

Se référant à la demande antérieure numéro DE 10 2013 221 743 A1, déposée en Allemagne, le demandeur a de sa propre initiative limité la portée du brevet pour l'Allemagne en présentant des revendications séparées pour cet État.

Le domaine de l'éclairage est réglementé de telle sorte que les modules d'éclairage conçus par les constructeurs automobiles donnent un éclairage correspondant à des normes très précises évaluées pour la sécurité des usagers de la route. Ces dernières années, il a été demandé aux constructeurs automobiles d'équiper la face avant de leurs véhicules de feux diurnes (dispositif connu également sous l'acronyme anglais DRL pour « Daytime Running Light »). Ces feux diurnes sont constamment allumés dès lors que les feux de route ou les feux de croisement ne sont pas allumés. Ces feux diurnes sont réglementés quant à la couleur qu'ils doivent émettre, à savoir une couleur blanche.

Un véhicule est également équipé aussi bien à l'arrière qu'à l'avant de feux indicateurs de direction, pour signaler aux autres usagers de la route l'intention du conducteur de tourner. Là encore, ces indicateurs de direction sont réglementés quant à la couleur qu'ils doivent émettre. Par ailleurs, une réglementation impose que les feux diurnes soient éteints lorsque les indicateurs de direction sont allumés, de manière à rendre plus visible ces derniers.

Pour des soucis de design et d'encombrement de la face avant du véhicule, on connaît, notamment par le brevet EP 2 161 494, des systèmes d'éclairage dans lequel on prévoit une même zone de sortie pour la fonction d'indicateurs de direction et pour la fonction de feux diurnes. Des premières diodes émettent une lumière de couleur jaune dans un élément optique apte à guider la lumière vers la zone de sortie et des deuxièmes diodes sont aptes à émettre une lumière de couleur blanche dans ce même élément optique. À l'allumage du véhicule, les deuxièmes diodes sont automatiquement allumées pour que de la lumière blanche sorte de l'élément optique par la zone de sortie, de manière à réaliser la fonction de feux diurnes. Lorsque l'utilisateur du véhicule souhaite mettre en marche les feux indicateurs de direction, un module de commande associé envoie successivement une instruction de commande d'extinction des deuxièmes diodes et une instruction de commande d'allumage des premières diodes. C'est alors de la lumière jaune qui sort par la zone de sortie de l'élément optique, réalisant ainsi la fonction d'indicateur de direction.

D'autres modules lumineux sont divulgués dans les demandes de brevet DE 10 2008 025397 A1, DE 10 2012 202508 A1 et DE 10 2012 211284 A1.

Dans ce contexte, l'invention propose un module lumineux qui permet également de combiner les fonctions d'indicateur de direction et de feux diurnes sur une surface de sortie commune.

Le module lumineux selon l'invention est défini dans la revendication indépendante 1. Selon l'invention le module lumineux, pour l'éclairage et la signalisation d'un véhicule automobile, comporte des premiers moyens d'émission d'une première couleur, ainsi que des deuxièmes moyens d'émission d'une lumière d'une deuxième couleur. Le module comporte en outre un élément optique agencé pour recevoir ces deux lumières de couleur distincte et pour les combiner. Les couleurs émises sont ici spécifiques en ce que les deuxièmes moyens d'émission émettent une couleur complémentaire de la première couleur émise par les premiers moyens d'émission, et on entend par la notion de complémentarité des couleurs le fait que la combinaison des lumières qui a lieu dans l'élément optique produise une lumière blanche.

Ainsi, on produit une lumière blanche nécessaire à la réalisation de la fonction de feux diurnes par la combinaison de rayons lumineux émis par des premiers et des deuxièmes moyens d'émission, parmi lesquels certains sont utilisés par ailleurs pour la réalisation de la fonction d'indicateur de direction. Le passage des feux diurnes aux feux indicateurs de direction est alors particulièrement facile et rapide par l'extinction et l'allumage des deuxièmes moyens d'émission.

Selon l'invention, les premiers moyens d'émission sont aptes à émettre majoritairement des rayons de longueur d'onde comprise dans la plage correspondant à la teinte ambre. Et avantageusement, ces premiers moyens d'émission sont aptes à émettre des rayons lumineux dans une plage de longueur d'onde comprise entre 587 et 597 nanomètres, et plus particulièrement entre 588 et 596 nanomètres.

Le choix de la couleur ambre pour réaliser la fonction d'indicateur de direction est ici particulièrement intéressant en ce que cette couleur répond à la norme réglementaire et en ce qu'elle permet une plus grande complémentarité avec la couleur des rayons lumineux émis par les deuxièmes moyens d'émission pour obtenir le blanc des feux diurnes.

Les deuxièmes moyens d'émission sont aptes à émettre des rayons de longueur d'onde correspondant à une teinte bleue, cyan, verte ou encore bleue-verte. Les valeurs de longueur d'onde sont obtenues par l'utilisation spécifique d'un diagramme de chromaticité.

On entend ici par « teinte bleue, cyan, verte ou encore bleue-verte » des lumières dont la longueur d'onde est comprise entre 465 et 505 nanomètres. Cette longueur d'onde permet d'obtenir de la couleur blanche, quand elle est combinée avec des rayons de longueur d'onde correspondant à la couleur ambre.

Avantageusement, la plage de longueur d'onde d'émission par les deuxièmes moyens d'émission est comprise entre 485 et 490 nanomètres. La couleur résultante par synthèse additive est ainsi complémentaire de la couleur ambre pour former une lumière de couleur blanche particulièrement robuste. On entend par une lumière de couleur blanche particulièrement robuste le fait que des variations dans la longueur d'onde des rayons lumineux émis par l'une ou l'autre des diodes permettent malgré tout l'obtention d'une lumière blanche conforme à la réglementation, c'est-à-dire compris dans une zone réglementairement définie.

Avantageusement, les premiers moyens d'émission sont formés par une première diode électroluminescente, tandis que les deuxièmes moyens d'émission peuvent être formés par une deuxième diode électroluminescente.

On peut prévoir que les deuxièmes moyens d'émission comportent au moins deux diodes electroluminescentes distinctes, aptes à émettre de la lumière de couleurs différentes. On choisit alors ces diodes de manière à ce que la couleur résultante de la synthèse additive des couleurs émises par ces deux diodes soit complémentaire de la première couleur pour produire au final, par combinaison avec cette dernière dans l'élément optique, la lumière blanche souhaitée.

Dans ce cas, on prévoit avantageusement qu'une diode soit apte à émettre une lumière de teinte bleue, et notamment selon une longueur d'onde comprise entre 380 à 485 nm, notamment voisine de 470 nm, et que l'autre diode soit apte à émettre une lumière de teinte verte, et notamment selon une longueur d'onde comprise entre 490 et 550 nm, et notamment voisine de 505 nm. Là encore ces différentes longueurs d'onde permettent dans la pratique d'obtenir cette lumière blanche par combinaison avec la couleur ambre.

Avantageusement, les premiers et deuxièmes moyens d'émission sont aptes à émettre de la lumière à l'intérieur d'un élément optique qui comporte une surface de sortie commune aux rayons lumineux émis par les deux moyens d'émission.

Ainsi, la lumière ambre lorsque seuls les premiers moyens d'émission fonctionnent et la lumière blanche lorsque les deux moyens d'émission fonctionnent simultanément sortent de l'élément optique par la même face de sortie.

L'élément optique prend avantageusement la forme d'un guide optique dans lequel les lumières émises par les premiers et deuxièmes moyens d'émission sont guidées vers la face de sortie commune, notamment par des réflexions totales internes successives. Le guide optique est formé dans un matériau transparent apte à être traversé par les rayons lumineux et on prévoira avantageusement de former le guide optique dans un matériau type polyméthacrylate de méthyle (PMMA) ou de polycarbonate (PC).

Par guide optique, on entend ici un élément optique dans lequel des rayons lumineux peuvent se propager depuis une face d'entrée vers une surface de sortie par réflexion interne totale sur au moins l'une des parois du guide. Il peut s'agit d'un guide tubulaire ou encore d'une nappe de guidage, c'est-à-dire un guide dont l'épaisseur est négligeable devant la longueur et/ou la largeur.

Le cas échéant, le guide de lumière est agencé pour combiner les lumières émises par les premiers et les deuxièmes moyens d'émission de manière à obtenir ladite lumière de couleur blanche via la surface de sortie commune. Selon différents modes de réalisation, la face d'entrée du guide optique peut être commune aux deux moyens d'émission, ou ce guide optique peut comporter deux faces d'entrée distinctes, chacune étant respectivement associée à l'un des deux moyens d'émission.

Dans ces deux cas, les premiers et deuxièmes moyens d'émission sont portés par une même plaque de support.

Dans le cas où la face d'entrée est commune aux deux moyens d'émission, ceux-ci sont respectivement formés par une ou plusieurs premières diodes électroluminescentes d'une première couleur, avantageusement la couleur ambre, et par une ou plusieurs deuxièmes diodes électroluminescentes d'une deuxième couleur complémentaire. Avantageusement, l'ensemble de ces diodes est disposé sur la plaque de support commune de façon alternée.

On entend par une disposition alternée le fait, par exemple non limitatif, qu'une première diode électroluminescente de couleur ambre est entourée, sur une même ligne de diodes, par deux deuxièmes diodes electroluminescentes de la couleur complémentaire, et inversement. D'autres alternances peuvent être envisagées, comme par exemple une alternance d'une diode électroluminescente de couleur ambre entourée de chaque côté par deux diodes électroluminescentes de la couleur complémentaire.

Dans le cas où le guide optique comporte deux faces d'entrée distinctes, le guide peut présenter une forme de Y, avec deux branches distinctes qui se rejoignent à une extrémité et qui portent une des faces d'entrée à l'autre extrémité. La plaque de support commune aux moyens d'émission s'étale en regard des deux faces d'entrée. Dans ce cas, la plaque de support peut porter un groupement de diodes aptes à émettre de la lumière d'une première couleur en face d'une branche du guide et un groupement distinct de diodes aptes à émettre de la lumière d'une deuxième couleur en face de l'autre branche.

On pourra également prévoir que les premiers et deuxièmes moyens d'émission sont formés respectivement par une pluralité de diodes électroluminescentes bi-puce, dans lesquelles une puce pour l'émission de la première couleur et une puce pour l'émission de la deuxième couleur complémentaire de la première couleur sont encapsulées dans un même boîtier.

Dans une variante de réalisation, l'élément optique peut prendre la forme de réflecteurs.

Par exemple, l'élément optique peut prendre la forme d'un réflecteur facétisé. Le cas échéant, l'élément optique comporte une pluralité de facettes, chaque facette étant associée à l'un des deux moyens d'émission. Avantageusement, les facettes associées au premier moyen d'émission peuvent être associées de façon primaire à ce premier moyen d'émission et de façon secondaire au deuxième moyen d'émission.

Avantageusement, le module lumineux comporte un module de commande au moins apte à élaborer et à transmettre une instruction d'allumage et d'extinction des deuxièmes moyens d'émission, pour réaliser ou non la combinaison des couleurs dans l'élément optique.

Le module de commande peut être agencé pour commander l'allumage uniquement d'une partie ou de la totalité des premiers moyens pour réaliser une première fonction photométrique de couleur ambre, par exemple via la face de sortie commune du guide, et pour commander l'allumage simultané d'une partie ou de la totalité des premiers moyens et d'une partie ou de la totalité des deuxièmes moyens pour réaliser une deuxième fonction photométrique de couleur blanche, distincte de la première fonction. Le cas échéant, la première fonction est un indicateur de direction et la deuxième fonction est un feu diurne.

On comprendra que le module de commande peut être agencé pour commander l'allumage des premiers et/ou des deuxièmes moyens de façon à ce que l'intensité lumineuse de la lumière émise par ces moyens soit réduite, par exemple pour réaliser une troisième fonction photométrique, comme par exemple un feu de position. Eventuellement, le module de commande peut être agencé pour commander l'allumage des premiers et deuxièmes moyens d'émission de façon à ce que l'intensité lumineuse de la lumière émise par les premiers moyens soit différente, et notamment inférieure, à celle de la lumière émise par les deuxièmes moyens.

L'invention concerne également un véhicule automobile dans lequel un module lumineux tel qu'il a été décrit précédemment est mis en place pour l'éclairage et/ou la signalisation du véhicule automobile. Dans ce véhicule, on réalise la fonction d'indicateur de direction et la fonction de feux diurnes dans une même zone de sortie du module lumineux, la lumière de première couleur, de teinte ambre, étant apte à former des moyens indicateurs de direction tandis que la lumière blanche, obtenue par combinaison de couleurs complémentaires dans l'élément optique du module lumineux, est apte à générer les feux diurnes du véhicule automobile.

D'autres caractéristiques et avantages de l'invention apparaîtront à la lecture de la description détaillée d'un mode de réalisation qui va suivre et pour la compréhension de laquelle on se reportera aux figures annexées parmi lesquelles :

- la figure 1 est une représentation schématique en coupe axiale d'un module lumineux selon un premier mode de réalisation de l'invention, avec notamment un guide optique présentant une face de sortie et une face d'entrée en regard de laquelle sont disposés des premiers et des deuxièmes moyens d'émission ;
- la figure 2 est une représentation, semblable à la celle de la figure 1, d'un module lumineux selon un deuxième mode de réalisation de l'invention, qui diffère notamment dans le nombre de faces d'entrée et dans la disposition des moyens d'émission ;
- la figure 3 est un diagramme de chromaticité sur lequel ont été portés les éléments de détermination graphique de la plage de valeurs de longueur d'onde appropriée pour les deuxièmes moyens d'émission selon une première variante de réalisation ; et
- la figure 4 est un diagramme de chromaticité semblable à celui illustré sur la figure 3, pour la détermination graphique de la plage de valeurs de longueur d'onde appropriée pour les deuxièmes moyens d'émission selon une deuxième variante de réalisation.

Tel qu'illustré sur les figures, un module lumineux 1 comporte des premiers moyens d'émission 2 et des deuxièmes moyens d'émission 4 portés par une plaque de support commune 6, de manière à se trouver en regard d'un élément optique 8, apte à recevoir les rayons lumineux émis par les moyens d'émission et à les guider et les combiner vers une face de sortie commune.

Les premiers moyens d'émission 2 sont formés par au moins une première diode électroluminescente 20. La couleur des rayons lumineux émis par ces premiers moyens d'émission présente une teinte ambre. Le nombre de ces premières diodes et leur puissance d'émission sont calculés en fonction de la proximité du module lumineux par rapport aux autres projecteurs du véhicule automobile, tel que cela sera décrit ci-après, de manière à respecter la réglementation en vigueur qui vise à prévoir une intensité lumineuse minimale des feux diurnes et une intensité lumineuse suffisante des indicateurs de direction pour qu'ils soient distinguables même lorsque les feux de croisement ou de route sont allumés simultanément. Avantageusement les premiers moyens d'émission sont formés par une pluralité de premières diodes portées par la plaque de support 6.

Les premières diodes électroluminescentes formant les premiers moyens d'émission sont aptes à émettre des rayons lumineux d'une longueur d'onde comprise entre 587 et 597 nm.

Les deuxièmes moyens d'émission 4 sont formés par au moins une deuxième diode électroluminescente 40 apte à émettre des rayons lumineux d'une longueur d'onde correspondant à une couleur complémentaire de la première couleur émise par les premiers moyens d'émission. On comprend par la notion de couleur complémentaire le fait que si les couleurs sont émises simultanément dans l'élément optique, elles sont aptes à se combiner pour former en sortie de l'élément optique de la lumière blanche.

Le choix précis de l'une ou l'autre des couleurs émises par les premiers et deuxièmes moyens d'émission sera décrit plus en détail ci-après, en détaillant notamment l'utilisation à cet effet d'un diagramme de chromaticité.

L'élément optique 8 prend la forme d'un guide formé dans un matériau transparent apte à être traversé par les rayons lumineux émis par les moyens d'émission depuis une face d'entrée 10 jusqu'à une face de sortie commune 12. Le matériau choisi peut notamment être un polymère transparent en polycarbonate, par exemple en polymethacrylate de méthyle, matériau communément désigné par l'acronyme PMMA.

Les rayons lumineux se déplacent dans le guide optique par des réflexions totales internes successives contre la ou les parois délimitant le contour radial du guide, entre la face d'entrée et la face de sortie.

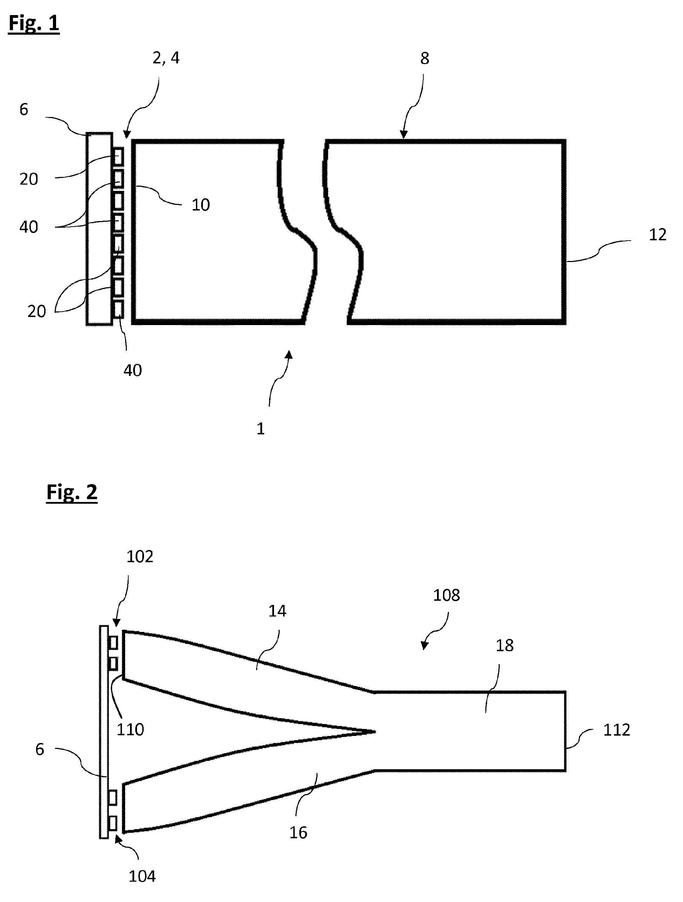

Dans un premier mode de réalisation illustré sur la figure 1, le guide optique présente la forme d'un tube de section circulaire uniforme depuis la face d'entrée 10 jusqu'à la face de sortie 12. L'ensemble des moyens d'émission est alors disposé en regard d'une face d'entrée commune. De manière à améliorer la combinaison des couleurs des différents rayons de lumière se réfléchissant dans le guide optique lorsque les premiers moyens d'émission et les deuxièmes moyens d'émission émettent simultanément, on prévoit de mélanger les moyens d'émission dans leur disposition sur la plaque de support commune. Avantageusement, tel que cela peut être représenté sur la figure 1, les premiers et deuxièmes moyens d'émission sont disposés de façon alternée, c'est-à-dire qu'une première diode électroluminescente 20 des premiers moyens d'émission est entourée par des deuxièmes diodes 40 des deuxièmes moyens d'émission et réciproquement.

Cette disposition alterné présente l'avantage évoqué précédemment d'une bonne combinaison des couleurs lorsque l'ensemble des moyens d'émission émet, et elle présente également l'avantage d'une disposition étalée sur toute la face d'entrée de chacun des moyens d'émission, de sorte que lorsque seuls les premiers moyens d'émission émettent, les rayons lumineux de la première couleur, de la teinte ambre, qui pénètrent dans le guide optique sont répartis sur toute la surface de la face d'entrée.

Dans un deuxième mode de réalisation, illustré sur la figure 2, le guide optique 108 présent une forme sensiblement en Y, dans laquelle deux branches distinctes 14 et 16 se rapprochent pour déboucher sur une branche commune 18, les branches distinctes présentant à leur extrémité libre une face d'entrée 110 en regard de laquelle sont disposés les premiers ou les deuxièmes moyens d'émission 102, 104, tandis que la branche commune présente à son extrémité libre une face de sortie commune 112. Les rayons lumineux émis par les moyens d'émission traversent les branches distinctes, par réflexions totales internes successives, pour déboucher dans la branche commune et se combiner, de manière à produire une lumière blanche sortant par la face de sortie commune.

Comme pour le premier mode de réalisation, lorsque seules les premiers moyens d'émission sont allumés, seuls des rayons lumineux de la première couleur, avantageusement de la teinte ambre, circulent dans le guide optique et il n'y a alors aucune combinaison de couleur, c'est la première couleur qui apparaît sur la face de sortie commune.

Dans ce cas, on peut prévoir de disposer les premiers moyens d'émission en regard d'une première branche du guide optique et les deuxièmes moyens d'émission en regard de l'autre branche du guide optique, tel que cela est illustré sur la figure 2, ou bien l'on peut prévoir, comme dans le mode de réalisation précédent, de combiner les moyens d'émission entre eux pour favoriser la combinaison de couleur lorsque les premiers et deuxièmes moyens d'émission émettent simultanément de la lumière dans le guide optique.

La plaque de support commune 6 est ici, dans le cas où les moyens d'émission sont formés par des diodes électroluminescentes, formée par une plaque de circuits imprimés, lesdits circuits électroniques permettant d'alimenter les diodes et de transmettre des instructions en provenance d'un module de commande pour la commande en allumage et en extinction de ces diodes.

On pourra prévoir sans sortir du contexte de l'invention, que les moyens d'émission soient portés par plusieurs plaques de circuits imprimés distinctes.

Le nombre de diodes électroluminescentes qui forment les premiers moyens d'émission et les deuxièmes moyens d'émission, et l'intensité d'émission de chacune de ces diodes sont calculés en fonction des normes réglementant les feux diurnes et les feux indicateurs de direction. A titre d'exemple, le règlement français actuel impose que les feux diurnes émettent dans l'axe optique à une intensité lumineuse au moins égale à 400 candelas. Et il impose également une intensité lumineuse minimale à respecter pour les indicateurs de direction, en précisant toutefois trois catégories distinctes en fonction de la proximité de ces indicateurs de direction avec les feux de croisement et les feux de route. Dans une première catégorie, dite catégorie 1, qui correspond à une position des feux indicateurs de direction proche des feux de croisement, les indicateurs de direction doivent émettre à une intensité lumineuse minimale de 175 candelas. Dans une deuxième et une troisième catégorie, dites catégories 1A et 1B, qui correspondent à une position encore plus proche des feux indicateurs de direction par rapport aux feux de route et aux feux de croisement, les indicateurs de direction doivent émettre respectivement à une intensité lumineuse minimale de 250 candelas et 400 candelas.

Dans le cadre de l'invention, les feux diurnes sont obtenus par la combinaison de l'émission des premières diodes de couleur ambre et des deuxièmes diodes de couleur bleu-vert, tandis que les feux indicateurs de direction sont obtenus uniquement par l'émission des premières diodes de couleur ambre.

Il résulte de ce qui précède que le nombre de premières diodes de couleur ambre est dimensionné pour pouvoir, lorsqu'elles sont toutes allumées, émettre dans l'axe optique des rayons dont l'intensité lumineuse est au moins égale au minimum réglementaire propre au véhicule en fonction de la catégorie 1, 1A ou 1B à laquelle il appartient. Et l'on adapte à ce nombre de premières diodes de couleur ambre le nombre de deuxièmes diodes de couleur bleu vert, sachant que leurs intensités lumineuses combinées permettra d'atteindra l'intensité lumineuse requise pour les feux diurnes.

Selon l'invention, on prévoit pour l'allumage des feux diurnes d'allumer l'ensemble des diodes bleu-vert, et d'allumer tout ou partie des diodes ambre, selon le nombre de diodes ambre portées par la plaque de support en regard de l'élément optique.

Dans le cas d'un véhicule de catégorie 1, où il est demandé que les feux diurnes émettent à au moins 400 candelas et que les indicateurs de direction émettent à au moins 175 candelas, les feux diurnes sont obtenus par l'allumage de toutes les diodes bleu-vert et de toutes les diodes ambre, tandis que seulement une partie des diodes ambre est allumée pour réaliser la fonction de feux indicateurs de direction, puisque seulement 175 candelas sont nécessaires pour respecter la réglementation.

Dans le cas d'un véhicule de catégorie 1B, toutes les diodes ambre sont allumées pour réaliser la fonction d'indicateur de direction puisqu'au moins 400 candelas sont nécessaires pour respecter la réglementation, tandis que seulement une partie de ces diodes ambre peut être allumée pour, combiné à l'allumage de toutes les diodes bleu-vert, respecter l'intensité lumineuse requise pour l'allumage des feux diurnes.

On va maintenant décrire plus en détails le fonctionnement de l'invention.

Au démarrage du véhicule, et si aucun parmi les feux de route et les feux de croisement n'est allumé, le module de commande envoie une première instruction d'allumage des premiers moyens d'émission 2, et une deuxième instruction d'allumage des deuxièmes moyens d'émission 4. Les premiers moyens d'émission émettent une lumière de couleur ambre, tandis que les deuxièmes moyens d'émission émettent une lumière de couleur bleue-verte, complémentaire de la couleur ambre. Ces deux lumières sont combinées dans le guide optique de manière à former, à hauteur de la face de sortie, une lumière de couleur blanche. On réalise ainsi les feux diurnes réglementaires.

Lorsque l'utilisateur souhaite indiquer un changement direction, le module de commande envoie une instruction d'extinction des deuxièmes moyens d'émission. Seuls les premiers moyens d'émission continuent à émettre de la lumière de couleur ambre, et c'est donc cette couleur ambre qui sort par la face de sortie commune du guide optique, au lieu de la couleur blanche précédemment. Les premiers moyens d'émission sont commandés en allumage et extinction successifs pour former un clignotement de la couleur ambre, et réaliser ainsi la fonction des feux indicateurs de direction.

On constate à la lecture de ce qui précède que la lumière blanche des feux diurnes est obtenue par combinaison de la couleur ambre, servant à former les feux indicateurs de direction, avec une autre couleur, de sorte que le passage de la fonction de feux diurnes à la fonction d'indicateur de direction est immédiat par l'extinction des deuxièmes moyens d'émission. On respecte ainsi très facilement et avec une grande réactivité l'obligation réglementaire selon laquelle les feux diurnes doivent être éteints lors de l'actionnement des feux indicateurs de direction.

On va maintenant décrire plus en détail comment l'invention permet de réaliser un choix optimisé des couleurs de lumière émise par les premiers et les deuxièmes moyens d'émission. Tel que cela a pu être précisé précédemment, la lumière émise par les premiers moyens d'émission est de teinte ambre tandis que la lumière émise par les deuxièmes moyens d'émission est de teinte bleue, cyan, verte ou bleue-verte.

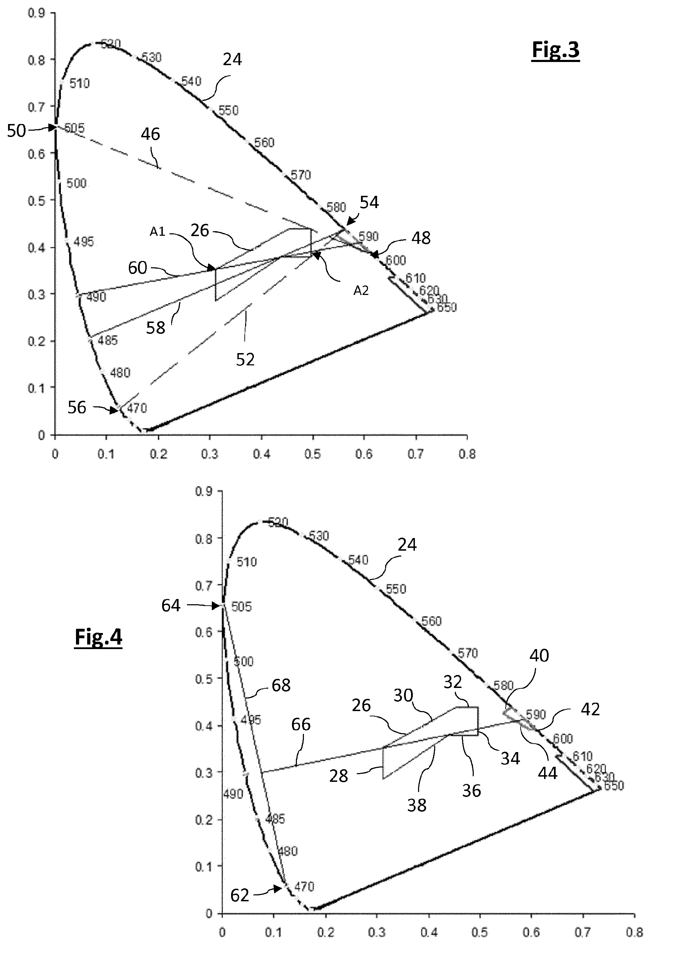

On utilise pour l'optimisation du choix des couleurs un diagramme de chromaticité, tel qu'illustré sur les figures 3 et 4, sur lequel les couleurs sont représentées en fonction de leur coordonnées x et y. Ce diagramme comporte une représentation du « spectrum locus » 24 et de la « zone de blancs réglementaires » 26.

Le « spectrum locus » est une ligne courbe sur laquelle sont disposées les couleurs pures dans l'ordre de leur longueur d'onde caractéristique. La couleur pure de teinte bleue est disposée à une extrémité du spectrum locus et les couleurs pures de teinte cyan, verte, jaune, ambre et rouge se succèdent dans cet ordre les unes après les autres. A l'intérieur de ce spectrum locus, les différentes couleurs découlant de chacune des teintes sont placées en fonction de leur saturation, c'est-à-dire de leur pureté, en se rapprochant au centre du diagramme d'une zone dans laquelle elles tendent vers le blanc.

La « zone de blancs réglementaires » correspond aux variations de blanc, en limite des couleurs les moins pures de chacune des teintes, que le règlement propre à l'éclairage diurne des véhicules automobiles a défini et que les constructeurs automobiles doivent respecter pour voir leurs véhicules homologués et aptes à être commercialisés. Cette zone de blancs règlementaires est définie par un hexagone dont les six côtés ont les équations caractéristiques suivantes :

Premier côté 28, dit côté de limite de la teinte bleue :

$$x \geq 0.310$$

Deuxième 30 et troisième 32 côté, dit côtés de limite de la teinte verte :

$$y \leq 0.150 + 0.640\, x \text{ et } y \leq 0.440$$

Quatrième côté 34, dit côté de limite de la teinte jaune :

$$x \leq 0.500$$

Cinquième côté 36, dit côté de limite de la teinte rouge :

$$y \geq 0.382$$

Sixième côté 38, dit côté de limite de la teinte violette ou pourpre :

$$y \geq 0.050 + 0.750\ x$$

Les sommets du polygone ont respectivement pour couple de coordonnées (x, y) : (0.310, 0.348), (0.310, 0.283), (0.443, 0.382), (0.500, 0.382), (0.500, 0.440), et (0.453, 0.440).

La zone de couleurs associées à la teinte ambre est de son côté définie par le spectrum locus et par trois segments de caractéristiques suivantes :

Premier segment 40, dit segment de limite de la teinte verte

$$y \leq x - 0.120$$

Deuxième segment 42, dit segment de limite de la teinte rouge

$$y \geq 0.390$$

Troisième segment 44, dit segment de limite de blanc

$$y \geq 0.790 - 0.670\ x$$

Une fois la zone de blancs réglementaires et la zone de couleur ambre tracées sur le diagramme, on peut déterminer de façon optimale la longueur d'onde que doivent présenter les rayons lumineux émis par les deuxièmes moyens d'émission pour être complémentaires à la couleur ambre émise par les premiers moyen d'émission.

On définit dans un premier temps une première plage de valeurs, la plus large possible, pour lesquelles la droite reliant un premier point du spectrum locus compris dans cette première plage de valeurs et un deuxième point du spectrum locus compris dans la zone de couleur ambre passe à travers, et au moins par une arête, la zone de blancs réglementaires. On a assuré alors théoriquement que la combinaison dans l'élément optique du module lumineux des couleurs émises par les premiers et les deuxièmes moyens d'émission produira du blanc apte à assurer réglementairement la fonction de feux diurnes. Il conviendra que les premiers et les deuxièmes moyens d'émission émettent selon une certaine intensité qui peut être calculée d'après le diagramme.

Pour cela, on trace une première droite 46 (représentée en pointillés sur la figure 3) qui passe par le point 48 du spectrum locus correspondant à la plus grande valeur de longueur d'onde pour la teinte ambre, et qui passe par le sommet de la zone de blancs réglementaires compris entre le troisième côté 32 et le quatrième côté 34. Cette droite coupe le spectrum locus en un point définissant alors la première borne de la première plage de valeurs 50.

On trace ensuite une deuxième droite 52 (représentée en pointillés sur la figure 3) qui passe par le point 54 du spectrum locus correspondant à la plus petite valeur de longueur d'onde pour la teinte ambre, et qui passe par le sommet de la zone de blancs réglementaires compris entre le quatrième côté 34 et le cinquième côté 36. Cette droite coupe le spectrum locus en un point définissant alors la deuxième borne de la première plage de valeurs 56.

On en déduit que de façon large, on peut prévoir des deuxièmes diodes des deuxièmes moyens d'émission telles que les rayons lumineux émis ont une longueur d'onde comprise entre 470 et 505 nanomètres, la valeur 470 correspondant à une teinte bleue tandis que la valeur 505 correspond à une teinte verte.

Toutefois, on comprend que pour des raisons d'usure dans le temps notamment, le matériau formant les diodes électroluminescentes des premiers et des deuxièmes moyens d'émission peut générer un rayon lumineux avec une longueur d'onde légèrement différente de celle prévue, et que l'intensité du flux lumineux peut également être légèrement différente de celle prévue. On prend alors le risque que la droite reliant les points représentatifs des couleurs sur le diagramme de chromaticité ne passe plus par une arête de la zone des blancs réglementaires, mais à l'extérieur de celle-ci, ce qui signifie que la synthèse additive des deux couleurs émises à l'intérieur de l'élément optique ne produirait pas du blanc acceptable pour réaliser la fonction de feux diurnes.

On souhaite alors, afin de s'assurer que du blanc réglementaire soit émis dans tous les cas de fonctionnement, déterminer une deuxième plage de valeurs de longueur d'onde, pour la deuxième couleur émise par les deuxièmes moyens d'émission. Cette deuxième plage de valeurs est plus réduite et lorsqu'on choisit des diodes émettant des rayons de longueur d'onde comprise dans cette deuxième plage de valeurs, on peut alors fournir par combinaison avec la première couleur émise par les premiers moyens d'émission un blanc robuste, c'est-à-dire un blanc dont la couleur peut légèrement varier sans sortir de la zone des blancs réglementaires pour réaliser la fonction de feux diurnes.

Comme précédemment, on détermine à l'aide du diagramme de chromaticité les bornes de cette deuxième plage de valeurs. Toutefois, dans ce cas, on cherche à tracer une troisième droite 58 et une quatrième droite 60 qui s'étend sur une grande distance à l'intérieur de la zone de blancs réglementaires, au lieu de passer par les sommets comme précédemment. Les deux droites 58 et 60 définies en traits pleins sur la figure 3 correspondent à cette définition. Elles passent chacune par un point du spectrum locus correspondant à la couleur ambre, en évitant si possible les limites de cette zone, et elles s'étendent sur une grande partie à l'intérieur de la zone de blancs réglementaires. Elles coupent chacune le spectrum locus à l'opposé de la zone définissant la couleur ambre, en définissant ainsi la deuxième plage de valeurs de longueur d'onde pour le choix de la couleur complémentaire à la couleur ambre pour former de façon robuste une lumière blanche réglementaire lorsque ces deux couleurs sont combinées.

La détermination de ces différentes plages de valeurs, à savoir la première plage la plus large ou la deuxième plage plus restreinte, peut s'obtenir par le calcul en utilisant les équations précédemment cités. On a présenté ici une façon plus empirique qui permet d'obtenir rapidement des résultats fiables, étant entendu que la couleur complémentaire de la couleur ambre peut différer de quelques nanomètres notamment lorsque le choix est fait dans la deuxième plage de valeurs, puisque le choix de celle-ci a été fait pour que des variations dans l'intensité du flux et dans la pureté de la longueur d'onde soient autorisées sans que la production de lumière blanche en soit pénalisée.

On en déduit que les deuxièmes moyens d'émission émettent avantageusement des rayons lumineux d'une longueur d'onde comprise entre 485 et 490 nm, et que cette lumière émise, sensiblement de couleur cyan, est complémentaire de la couleur ambre des rayons lumineux émis par les premiers moyens d'émission.

Le diagramme de chromaticité permet ensuite de déterminer l'intensité lumineuse à laquelle doivent émettre les deuxièmes moyens d'émission pour créer du blanc en combinaison avec les premiers moyens d'émission. A titre d'exemple, les diodes émettant des rayons de longueur d'onde de 490 nm doivent émettre entre 68 % (point A1) et 13,7 % (point A2).

Dans une variante de réalisation, on pourra prévoir que les deuxièmes moyens d'émission sont formés par plusieurs types de diodes électroluminescentes aptes à émettre des rayons lumineux de longueur d'onde différente. Les deuxièmes moyens d'émission comportent deux types de diodes électroluminescentes distinctes, adaptés à émettre chacun de la lumière de couleur différente l'une de l'autre, ces couleurs étant choisies de sorte que la couleur résultante de leur synthèse additive est complémentaire de la première couleur pour former, par combinaison avec ladite première couleur, ladite lumière blanche.

A titre d'exemple illustré sur la figure 4, une troisième diode 62 des deuxièmes moyens d'émission est apte à émettre une lumière de couleur bleue, de longueur d'onde égale à 470 nanomètres, tandis que la quatrième diode 64 des deuxièmes moyens d'émission est apte à émettre une lumière de couleur verte de longueur d'onde égale à 505 nanomètres.

On utilise pour cela le même raisonnement que précédemment sur le diagramme, en traçant la ligne 66 qui offre la lumière blanche la plus robuste par combinaison d'une seconde couleur avec une couleur ambre. On cherche ensuite à tracer un segment 68 passant par deux points du spectrum locus qui coupent la ligne 66 précédemment décrite, de manière à ce que la zone de blancs réglementaires se trouve entre la zone ambre et le point d'intersection de la droite et de la ligne. La synthèse additive de l'ensemble des diodes permet alors l'obtention du blanc dès lors que chacune des diodes émet un flux lumineux d'intensité adaptée et calculée grâce au diagramme.

La description qui précède explique clairement comment l'invention permet d'atteindre les objectifs qu'elle s'est fixés et notamment de proposer un module lumineux qui permet de réaliser alternativement la fonction des feux indicateurs de direction et la fonction de feux diurnes en sortie d'un élément optique unique. L'une des fonctions est obtenue par la combinaison de deux couleurs dont l'une permet l'obtention, quand elle est employée seule, de l'autre fonction. Le passage des feux diurnes aux feux indicateurs de direction en est facilité. En outre, l'invention propose un choix particulier de couleurs émises par les diodes. La couleur ambre choisie permet de respecter le règlement relatif aux feux indicateurs de direction et les calculs tels qu'ils ont été décrits ci-avant montrent que le choix de cette couleur permet ensuite un large choix de diodes aptes à former les deuxièmes moyens d'émission.

Bien entendu, diverses modifications peuvent être apportées par l'homme du métier aux structures du module lumineux, qui viennent d'être décrites à titre d'exemples non limitatifs.

**Revendications**

**Revendications pour l'(les) Etat(s) contractant(s) suivant(s): AT, BE, CH, DE, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM**

1.  Module lumineux, d'éclairage et/ou de signalisation d'un véhicule automobile, comportant :

    - au moins des premiers moyens d'émission (2 ; 102) d'une lumière d'une première couleur, les premiers moyens d'émission (2 ; 102) étant aptes à émettre une lumière de couleur ambre pour réaliser la fonction d'indicateur de direction ;
- au moins des deuxièmes moyens d'émission (4 ; 104) d'une lumière d'une deuxième couleur, les deuxièmes moyens d'émission (4 ; 104) étant aptes à émettre une lumière d'une couleur bleue et/ou verte et/ou bleue-verte complémentaire à la couleur ambre,

**caractérisé en ce qu'**il comporte au moins un élément optique (8 ; 108) agencé pour recevoir lesdites lumières de couleurs différentes et pour les combiner, les couleurs étant complémentaires l'une de l'autre de sorte que la combinaison desdites lumières produit de la lumière blanche nécessaire à la réalisation de la fonction de feux diurnes par la combinaison de rayon lumineux émis par des premiers et des deuxièmes moyens d'émission.

2. Module lumineux selon la revendication 1, **caractérisé en ce que** les premiers moyens d'émission (2 ; 102) sont formés par une première diode électroluminescente (20).

3. Module lumineux selon la revendication précédente, **caractérisé en ce que** les deuxièmes moyens d'émission (4 ; 104) sont formés par une deuxième diode électroluminescente (40).

4. Module lumineux selon la revendication 2, **caractérisé en ce que** les deuxièmes moyens d'émission (4 ; 104) comportent au moins deux diodes électroluminescentes distinctes (62, 64), adaptées à émettre chacune de la lumière de couleur différente l'une de l'autre, ces couleurs étant choisies de sorte que la couleur résultante de leur synthèse additive est complémentaire de la première couleur émise par les premiers moyens d'émission (2 ; 102) pour former, par combinaison avec ladite première couleur, ladite lumière blanche.

5. Module lumineux selon la revendication 4, **caractérisé en ce que** les au moins deux diodes électroluminescentes distinctes consistent en une troisième diode (62) des deuxièmes moyens d'émission (4 ; 104) apte à émettre une lumière de couleur bleue et en une quatrième diode (64) des deuxièmes moyens d'émission apte à émettre une lumière de couleur verte.

6. Module lumineux selon l'une des revendications précédentes, **caractérisé en ce que** les premiers (2 ; 102) et deuxièmes (4 ; 104) moyens d'émission sont portés par une même plaque de support (6).

7. Module lumineux selon la revendication 1, **caractérisé en ce que** les premiers et deuxièmes moyens d'émission (2, 4) sont formés respectivement par une pluralité de premières diodes électroluminescentes (20) aptes à émettre une lumière d'une première couleur et par une pluralité de deuxièmes diodes électroluminescentes (40) aptes à émettre une lumière d'une deuxième couleur complémentaire, l'ensemble de ces diodes étant disposé sur une plaque de support commune (6), notamment de façon alternée.

8. Module lumineux selon la revendication 1, **caractérisé en ce que** les premiers (2 ; 102) et deuxièmes (4 ; 104) moyens d'émission sont formés respectivement par une pluralité de diodes électroluminescentes aptes à émettre une lumière d'une première couleur et par une pluralité de diodes électroluminescentes aptes à émettre une lumière d'une deuxième couleur complémentaire, l'ensemble de ces diodes étant réuni deux à deux pour former des diodes électroluminescentes bi-puce, dans lesquelles une puce pour l'émission de la première couleur et une puce pour l'émission de la deuxième couleur sont encapsulées dans un même boîtier.

9. Module lumineux selon l'une des revendications 1 à 8, **caractérisé en ce que** les premiers (2 ; 102) et deuxièmes moyens (4 ; 104) d'émission sont aptes à émettre des rayons lumineux à l'intérieur d'un guide optique qui forme ledit élément optique (8 ; 108) et qui comporte d'une part une surface de sortie commune (12 ; 112) aux deux moyens d'émission par laquelle est émise la lumière blanche obtenue par combinaison, et d'autre part au moins une face d'entrée (10 ; 110) en regard de laquelle sont disposés lesdits moyens d'émission.

10. Module lumineux selon la revendication précédente, **caractérisé en ce que** la face d'entrée (10) est commune aux deux moyens d'émission (2, 4).

11. Module lumineux selon la revendication 9, caractérisé ce que le guide optique (108) porte deux faces d'entrée distinctes (110), chacune étant respectivement associée à l'un des deux moyens d'émission (102, 104).

12. Module lumineux selon l'une des revendications 1 à 11, **caractérisé en ce qu'**il comporte un module de commande adapté à envoyer une instruction d'allumage et d'extinction des deuxièmes moyens d'émission (4 ; 104), pour réaliser ou non la combinaison des couleurs dans ledit module.

13. Véhicule automobile, dans lequel un module lumineux selon l'une des revendications 1 à 12 est mis en place pour l'éclairage et/ou la signalisation du véhicule automobile.

## Revendications pour l'(les) Etat(s) contractant(s) suivant(s): DE

1. Module lumineux, d'éclairage et/ou de signalisation d'un véhicule automobile, comportant :

   - au moins des premiers moyens d'émission (2 ; 102) d'une lumière d'une première couleur, les premiers moyens d'émission (2 ; 102) étant aptes à émettre une lumière de couleur ambre pour réaliser la fonction d'indicateur de direction ;
   - au moins des deuxièmes moyens d'émission (4 ; 104) d'une lumière d'une deuxième couleur, les deuxièmes moyens d'émission (4 ; 104) étant aptes à émettre une lumière d'une couleur bleue et/ou verte et/ou bleue-verte complémentaire à la couleur ambre,

   **caractérisé en ce qu'**il comporte au moins un élément optique (8 ; 108) agencé pour recevoir lesdites lumières de couleurs différentes et pour les combiner, les couleurs étant complémentaires l'une de l'autre de sorte que la combinaison desdites lumières produit de la lumière blanche nécessaire à la réalisation de la fonction de feux diurnes par la combinaison de rayons lumineux émis par des premiers et des deuxièmes moyens d'émission,

   les premiers (2 ; 102) et deuxièmes moyens (4 ; 104) d'émission étant aptes à émettre des rayons lumineux à l'intérieur d'un guide optique qui forme ledit élément optique (8 ; 108) et qui comporte d'une part une surface de sortie commune (12 ; 112) aux deux moyens d'émission par laquelle est émise la lumière blanche obtenue par combinaison, et d'autre part au moins une face d'entrée (10 ; 110) en regard de laquelle sont disposés lesdits moyens d'émission, les lumières émises par les premiers (2 ; 102) et deuxièmes moyens (4 ; 104) d'émission étant guidées vers la surface de sortie commune, par des réflexions totales internes successives.

2. Module lumineux selon la revendication 1, **caractérisé en ce que** les premiers moyens d'émission (2 ; 102) sont formés par une première diode électroluminescente (20).

3. Module lumineux selon la revendication précédente, **caractérisé en ce que** les deuxièmes moyens d'émission (4 ; 104) sont formés par une deuxième diode électroluminescente (40).

4. Module lumineux selon la revendication 2, **caractérisé en ce que** les deuxièmes moyens d'émission (4 ; 104) comportent au moins deux diodes électroluminescentes distinctes (62, 64), adaptées à émettre chacune de la lumière de couleur différente l'une de l'autre, ces couleurs étant choisies de sorte que la couleur résultante de leur synthèse additive est complémentaire de la première couleur émise par les premiers moyens d'émission (2 ; 102) pour former, par combinaison avec ladite première couleur, ladite lumière blanche.

5. Module lumineux selon la revendication 4, **caractérisé en ce que** les au moins deux diodes électroluminescentes distinctes consistent en une troisième diode (62) des deuxièmes moyens d'émission (4 ; 104) apte à émettre une lumière de couleur bleue et en une quatrième diode (64) des deuxièmes moyens d'émission apte à émettre une lumière de couleur verte.

6. Module lumineux selon l'une des revendications précédentes, **caractérisé en ce que** les premiers (2 ; 102) et deuxièmes (4 ; 104) moyens d'émission sont portés par une même plaque de support (6).

7. Module lumineux selon la revendication 1, **caractérisé en ce que** les premiers et deuxièmes moyens d'émission (2, 4) sont formés respectivement par une pluralité de premières diodes électroluminescentes (20) aptes à émettre une lumière d'une première couleur et par une pluralité de deuxièmes diodes électroluminescentes (40) aptes à émettre une lumière d'une deuxième couleur complémentaire, l'ensemble de ces diodes étant disposé sur une plaque de support commune (6), notamment de façon alternée.

8. Module lumineux selon la revendication 1, **caractérisé en ce que** les premiers (2 ; 102) et deuxièmes (4 ; 104) moyens d'émission sont formés respectivement par une pluralité de diodes électroluminescentes aptes à émettre une lumière d'une première couleur et par une pluralité de diodes électroluminescentes aptes à émettre une lumière d'une deuxième couleur complémentaire, l'ensemble de ces diodes étant réuni deux à deux pour former des diodes électroluminescentes bi-puce, dans lesquelles une puce pour l'émission de la première couleur et une puce pour l'émission de la deuxième couleur sont encapsulées dans un même boîtier.

9. Module lumineux selon l'une des revendications 1 à 8, **caractérisé en ce que** la face d'entrée (10) est commune aux deux moyens d'émission (2, 4).

10. Module lumineux selon l'une des revendications 1 à 8, caractérisé ce que le guide optique (108) porte deux faces d'entrée distinctes (110), chacune étant respectivement associée à l'un des deux moyens d'émission (102, 104).

11. Module lumineux selon l'une des revendications 1 à 10, **caractérisé en ce qu'**il comporte un module de commande adapté à envoyer une instruction d'allumage et d'extinction des deuxièmes moyens d'émission (4; 104), pour réaliser ou non la combinaison des couleurs dans ledit module.

12. Véhicule automobile, dans lequel un module lumineux selon l'une des revendications 1 à 11 est mis en place pour l'éclairage et/ou la signalisation du véhicule automobile.

**Patentansprüche**

**Patentansprüche für folgende(n) Vertragsstaat(en): AT, BE, CH, DE, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM**

1. Leuchtmodul für die Beleuchtung und/oder Signalgebung eines Kraftfahrzeugs, das aufweist:

   - mindestens erste Emissionseinrichtungen (2; 102) eines Lichts einer ersten Farbe, wobei die ersten Emissionseinrichtungen (2; 102) geeignet sind, ein bernsteinfarbenes Licht zu emittieren, um die Funktion eines Fahrtrichtungsanzeigers zu erfüllen;
   - mindestens zweite Emissionseinrichtungen (4; 104) eines Lichts einer zweiten Farbe, wobei die zweiten Emissionseinrichtungen (4; 104) geeignet sind, ein Licht einer blauen und/oder grünen und/oder blaugrünen Farbe komplementär zur Bernsteinfarbe zu emittieren,

   **dadurch gekennzeichnet, dass** es mindestens ein optisches Element (8; 108) aufweist, das eingerichtet ist, die Lichter unterschiedlicher Farben zu empfangen und sie zu kombinieren, wobei die Farben zueinander komplementär sind, so dass die Kombination der Lichter für die Erfüllung der Funktion von Tagfahrlicht notwendiges weißes Licht durch die Kombination von ersten und zweiten Emissionseinrichtungen emittierten Lichtstrahlen erzeugt.

2. Leuchtmodul nach Anspruch 1, **dadurch gekennzeichnet, dass** die ersten Emissionseinrichtungen (2; 102) von einer ersten Elektrolumineszenzdiode (20) gebildet werden.

3. Leuchtmodul nach dem vorhergehenden Anspruch, **dadurch gekennzeichnet, dass** die zweiten Emissionseinrichtungen (4; 104) von einer zweiten Elektrolumineszenzdiode (40) gebildet werden.

4. Leuchtmodul nach Anspruch 2, **dadurch gekennzeichnet, dass** die zweiten Emissionseinrichtungen (4; 104) mindestens zwei unterschiedliche Elektrolumineszenzdioden (62, 64) aufweisen, die geeignet sind, je Licht voneinander unterschiedlicher Farbe zu emittieren, wobei diese Farben so gewählt werden, dass die aus ihrer additiven Synthese resultierende Farbe komplementär zur von den ersten Emissionseinrichtungen (2; 102) emittierten ersten Farbe ist, um durch Kombination mit der ersten Farbe das weiße Licht zu bilden.

5. Leuchtmodul nach Anspruch 4, **dadurch gekennzeichnet, dass** die mindestens zwei unterschiedlichen Elektrolumineszenzdioden aus einer dritten Diode (62) der zweiten Emissionseinrichtungen (4; 104), die geeignet ist, ein Licht blauer Farbe zu emittieren, und aus einer vierten Diode (64) der zweiten Emissionseinrichtungen bestehen, die geeignet ist, ein Licht grüner Farbe zu emittieren.

6. Leuchtmodul nach einem der vorhergehenden Ansprüche, **dadurch gekennzeichnet, dass** die ersten (2; 102) und zweiten (4; 104) Emissionseinrichtungen von einer gleichen Tragplatte (6) getragen werden.

7. Leuchtmodul nach Anspruch 1, **dadurch gekennzeichnet, dass** die ersten und zweiten Emissionseinrichtungen (2, 4) je von einer Vielzahl erster Elektrolumineszenzdioden (20), die geeignet sind, ein Licht einer ersten Farbe zu emittieren, und von einer Vielzahl zweiter Elektrolumineszenzdioden (40) gebildet werden, die geeignet sind, ein Licht einer zweiten komplementären Farbe zu emittieren, wobei die Einheit dieser Dioden auf einer gemeinsamen Tragplatte (6) insbesondere abwechselnd angeordnet ist.

8. Leuchtmodul nach Anspruch 1, **dadurch gekennzeichnet, dass** die ersten (2; 102) und zweiten (4; 104) Emissionseinrichtungen je von einer Vielzahl von Elektrolumineszenzdioden, die geeignet sind, ein Licht einer ersten Farbe zu emittieren, und von einer Vielzahl von Elektrolumineszenzdioden gebildet werden, die geeignet sind, ein Licht einer zweiten komplementären Farbe zu emittieren, wobei die Einheit dieser Dioden paarweise zusammengefügt wird, um Zweichip-Elektrolumineszenzdioden zu bilden, in denen ein Chip für die Emission der ersten Farbe und ein Chip für die Emission der zweiten Farbe in einem gleichen Gehäuse eingekapselt sind.

9. Leuchtmodul nach einem der Ansprüche 1 bis 8, **dadurch gekennzeichnet, dass** die ersten (2; 102) und zweiten Emissionseinrichtungen (4; 104) geeignet sind, Lichtstrahlen innerhalb eines Lichtwellenleiters zu emittieren, der das optische Element (8; 108) bildet und der einerseits eine den zwei Emissionseinrichtungen gemeinsame Austrittsfläche (12;

112), durch die das durch Kombination erhaltene weiße Licht emittiert wird, und andererseits mindestens eine Eintrittsseite (10; 110) aufweist, der gegenüber die Emissionseinrichtungen angeordnet sind.

10. Leuchtmodul nach dem vorhergehenden Anspruch, **dadurch gekennzeichnet, dass** die Eintrittsseite (10) den zwei Emissionseinrichtungen (2, 4) gemeinsam ist.

11. Leuchtmodul nach Anspruch 9, **dadurch gekennzeichnet, dass** der Lichtwellenleiter (108) zwei unterschiedliche Eintrittsseiten (110) trägt, die je einer der zwei Emissionseinrichtungen (102, 104) zugeordnet sind.

12. Leuchtmodul nach einem der Ansprüche 1 bis 11, **dadurch gekennzeichnet, dass** es ein Steuermodul aufweist, das geeignet ist, einen Einschalt- und Ausschaltbefehl der zweiten Emissionseinrichtungen (4; 104) zu senden, um die Kombination der Farben im Modul durchzuführen oder nicht.

13. Kraftfahrzeug, bei dem ein Leuchtmodul nach einem der Ansprüche 1 bis 12 zur Beleuchtung und/oder Signalisierung des Kraftfahrzeugs eingesetzt wird.

**Patentansprüche für folgende(n) Vertragsstaat(en): DE**

1. Leuchtmodul für die Beleuchtung und/oder Signalgebung eines Kraftfahrzeugs, das aufweist:

   - mindestens erste Emissionseinrichtungen (2; 102) eines Lichts einer ersten Farbe, wobei die ersten Emissionseinrichtungen (2; 102) geeignet sind, ein bernsteinfarbenes Licht zu emittieren, um die Funktion eines Fahrtrichtungsanzeigers zu erfüllen;
   - mindestens zweite Emissionseinrichtungen (4; 104) eines Lichts einer zweiten Farbe, wobei die zweiten Emissionseinrichtungen (4; 104) geeignet sind, ein Licht einer blauen und/oder grünen und/oder blaugrünen Farbe komplementär zur Bernsteinfarbe zu emittieren,
   **dadurch gekennzeichnet, dass** es mindestens ein optisches Element (8; 108) aufweist, das eingerichtet ist, die Lichter unterschiedlicher Farben zu empfangen und sie zu kombinieren, wobei die Farben zueinander komplementär sind, so dass die Kombination der Lichter für die Erfüllung der Funktion von Tagfahrlicht notwendiges weißes Licht durch die Kombination von von ersten und zweiten Emissionseinrichtungen emittierten Lichtstrahlen erzeugt, wobei die ersten (2; 102) und zweiten Emissionseinrichtungen (4; 104) geeignet sind, Lichtstrahlen innerhalb eines Lichtwellenleiters zu emittieren, der das optische Element (8; 108) bildet und der einerseits eine den zwei Emissionseinrichtungen gemeinsame Austrittsfläche (12; 112), durch die das durch Kombination erhaltene weiße Licht emittiert wird, und andererseits mindestens eine Eintrittsseite (10; 110) aufweist, der gegenüber die Emissionseinrichtungen angeordnet sind, wobei die von der ersten (2; 102) und zweiten Emissionseinrichtungen (4; 104) emittierende Lichter durch aufeinanderfolgende innere Totalreflexionen zur gemeinsamen Austrittsfläche geleitet wird.

2. Leuchtmodul nach Anspruch 1, **dadurch gekennzeichnet, dass** die ersten Emissionseinrichtungen (2; 102) von einer ersten Elektrolumineszenzdiode (20) gebildet werden.

3. Leuchtmodul nach dem vorhergehenden Anspruch, **dadurch gekennzeichnet, dass** die zweiten Emissionseinrichtungen (4; 104) von einer zweiten Elektrolumineszenzdiode (40) gebildet werden.

4. Leuchtmodul nach Anspruch 2, **dadurch gekennzeichnet, dass** die zweiten Emissionseinrichtungen (4; 104) mindestens zwei unterschiedliche Elektrolumineszenzdioden (62, 64) aufweisen, die geeignet sind, je Licht voneinander unterschiedlicher Farbe zu emittieren, wobei diese Farben so gewählt werden, dass die aus ihrer additiven Synthese resultierende Farbe komplementär zur von den ersten Emissionseinrichtungen (2; 102) emittierten ersten Farbe ist, um durch Kombination mit der ersten Farbe das weiße Licht zu bilden.

5. Leuchtmodul nach Anspruch 4, **dadurch gekennzeichnet, dass** die mindestens zwei unterschiedlichen Elektrolumineszenzdioden aus einer dritten Diode (62) der zweiten Emissionseinrichtungen (4; 104), die geeignet ist, ein Licht blauer Farbe zu emittieren, und aus einer vierten Diode (64) der zweiten Emissionseinrichtungen bestehen, die geeignet ist, ein Licht grüner Farbe zu emittieren.

6. Leuchtmodul nach einem der vorhergehenden Ansprüche, **dadurch gekennzeichnet, dass** die ersten (2; 102) und zweiten (4; 104) Emissionseinrichtungen von einer gleichen Tragplatte (6) getragen werden.

7. Leuchtmodul nach Anspruch 1, **dadurch gekennzeichnet, dass** die ersten und zweiten Emissionseinrichtungen (2, 4) je von einer Vielzahl erster Elektrolumineszenzdioden (20), die geeignet sind, ein Licht einer ersten Farbe zu emittieren, und von einer Vielzahl zweiter Elektrolumineszenzdioden (40) gebildet werden, die geeignet sind, ein Licht einer zweiten komplementären Farbe zu emittieren, wobei die Einheit dieser Dioden auf einer gemeinsamen Tragplatte (6) insbesondere abwechselnd angeordnet ist.

8. Leuchtmodul nach Anspruch 1, **dadurch gekennzeichnet, dass** die ersten (2; 102) und zweiten (4; 104) Emissionseinrichtungen je von einer Vielzahl von Elektrolumineszenzdioden, die geeignet sind, ein Licht einer ersten Farbe zu emittieren, und von einer Vielzahl von Elektrolumineszenzdioden gebildet werden, die geeignet sind, ein Licht einer zweiten komplementären Farbe zu emittieren, wobei die Einheit dieser Dioden paarweise zusammengefügt wird, um Zweichip-Elektrolumineszenzdioden zu bilden, in denen ein Chip für die Emission der ersten Farbe und ein Chip für die Emission der zweiten Farbe in einem gleichen Gehäuse eingekapselt sind.

9. Leuchtmodul nach einem der Ansprüche 1 bis 8, **dadurch gekennzeichnet, dass** die Eintrittsseite (10) den zwei Emissionseinrichtungen (2, 4) gemeinsam ist.

10. Leuchtmodul nach einem der Ansprüche 1 bis 8, **dadurch gekennzeichnet, dass** der Lichtwellenleiter (108) zwei unterschiedliche Eintrittsseiten (110) trägt, die je einer der zwei Emissionseinrichtungen (102, 104) zugeordnet sind.

11. Leuchtmodul nach einem der Ansprüche 1 bis 10, **dadurch gekennzeichnet, dass** es ein Steuermodul aufweist, das geeignet ist, einen Einschalt- und Ausschaltbefehl der zweiten Emissionseinrichtungen (4; 104) zu senden, um die Kombination der Farben im Modul durchzuführen oder nicht.

12. Kraftfahrzeug, bei dem ein Leuchtmodul nach einem der Ansprüche 1 bis 11 zur Beleuchtung und/oder Signalisierung des Kraftfahrzeugs eingesetzt wird.

**Claims**

**Claims for the following Contracting State(s): AT, BE, CH, DE, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM**

1. Light module, for lighting and/or signalling of a motor vehicle, comprising:

   - at least first emission means (2; 102) of a light of a first colour, the first emission means (2; 102) being capable of emitting a light of amber colour to produce the direction indicator function;
   - at least second emission means (4; 104) of a light of a second colour, the second emission means (4; 104) being capable of emitting a light of a blue and/or green and/or blue-green colour complementing the amber colour, **characterized in that** it comprises at least one optical element (8; 108) arranged to receive said lights of different colours and to combine them, the colours being complementary to one another such that the combination of said lights produces white light necessary to the production of daytime running lights by the combination of light rays emitted by the first and second emission means.

2. Light module according to Claim 1, **characterized in that** the first emission means (2; 102) are formed by a first light-emitting diode (20).

3. Light module according to the preceding claim, **characterized in that** the second emission means (4; 104) are formed by a second light-emitting diode (40).

4. Light module according to Claim 2, **characterized in that** the second emission means (4; 104) comprise at least two distinct light-emitting diodes (62, 64), adapted to each emit light of a colour different from one another, these colours being chosen such that the colour from the additive synthesis thereof complements the first colour emitted by the first emission means (2; 102) to form, by combination with said first colour, said white light.

5. Light module according to Claim 4, **characterized in that** the at least two distinct light-emitting diodes consist of a third diode (62) of the second emission means (4; 104) capable of emitting a light of blue colour and of a fourth diode (64) of the second emission means capable of emitting a light of green colour.

6. Light module according to one of the preceding claims, **characterized in that** the first (2; 102) and second (4; 104) emission means are borne by a same support plate (6).

7. Light module according to Claim 1, **characterized in that** the first and second emission means (2, 4) are formed respectively by a plurality of first light-emitting diodes (20) capable of emitting a light of a first colour and by a plurality of second light-emitting diodes (40) capable of emitting a complementary second colour, all of these diodes being positioned on a common support plate (6), notably alternately.

8. Light module according to Claim 1, **characterized**

in that the first (2; 102) and second (4; 104) emission means are formed respectively by a plurality of light-emitting diodes capable of emitting a light of a first colour and by a plurality of light-emitting diodes capable of emitting a light of a complementary second colour, all of these diodes being joined pairwise to form bi-chip light-emitting diodes, in which one chip for the emission of the first colour and one chip for the emission of the second colour are encapsulated in a same package.

9. Light module according to one of Claims 1 to 8, **characterized in that** the first (2; 102) and second (4; 104) emission means are capable of emitting light rays inside an optical guide which forms said optical element (8; 108) and which comprises, on one side, an output surface (12; 112) common to the two emission means by which the white light obtained by combination is emitted, and, on the other side, at least one input face (10; 110) opposite which said emission means are positioned.

10. Light module according to the preceding claim, **characterized in that** the input face (10) is common to the two emission means (2, 4).

11. Light module according to Claim 9, **characterized in that** the optical guide (108) bears two distinct input faces (110), each being respectively associated with one of the two emission means (102, 104).

12. Light module according to one of Claims 1 to 11, **characterized in that** it comprises a control module adapted to send an instruction to switch on and switch off the second emission means (4; 104), to produce or not produce the combination of the colours in said module.

13. Motor vehicle, in which a light module according to one of Claims 1 to 12 is installed for the lighting and/or the signalling of the motor vehicle.

**Claims for the following Contracting State(s): DE**

1. Light module, for lighting and/or signalling of a motor vehicle, comprising:

   - at least first emission means (2; 102) of a light of a first colour, the first emission means (2; 102) being capable of emitting a light of amber colour to produce the direction indicator function;
   - at least second emission means (4; 104) of a light of a second colour, the second emission means (4; 104) being capable of emitting a light of a blue and/or green and/or blue-green colour complementing the amber colour, **characterized in that** it comprises at least one optical element (8; 108) arranged to receive said lights of different colours and to combine them, the colours being complementary to one another such that the combination of said lights produces white light necessary to the production of daytime running lights by the combination of light rays emitted by the first and second emission means,

the first (2; 102) and second (4; 104) emission means being capable of emitting light rays inside an optical guide which forms said optical element (8; 108) and which comprises, on one side, an output surface (12; 112) common to the two emission means by which the white light obtained by combination is emitted, and, on the other side, at least one input face (10; 110) opposite which said emission means are positioned,

the lights emitted by the first (2; 102) and second (4; 104) emission means being guided towards the common output surface by successive total internal reflections.

2. Light module according to Claim 1, **characterized in that** the first emission means (2; 102) are formed by a first light-emitting diode (20).

3. Light module according to the preceding claim, **characterized in that** the second emission means (4; 104) are formed by a second light-emitting diode (40).

4. Light module according to Claim 2, **characterized in that** the second emission means (4; 104) comprise at least two distinct light-emitting diodes (62, 64), adapted to each emit light of a colour different from one another, these colours being chosen such that the colour from the additive synthesis thereof complements the first colour emitted by the first emission means (2; 102) to form, by combination with said first colour, said white light.

5. Light module according to Claim 4, **characterized in that** the at least two distinct light-emitting diodes consist of a third diode (62) of the second emission means (4; 104) capable of emitting a light of blue colour and of a fourth diode (64) of the second emission means capable of emitting a light of green colour.

6. Light module according to one of the preceding claims, **characterized in that** the first (2; 102) and second (4; 104) emission means are borne by a same support plate (6).

7. Light module according to Claim 1, **characterized in that** the first and second emission means (2, 4) are formed respectively by a plurality of first light-emitting diodes (20) capable of emitting a light of a first colour and by a plurality of second light-emitting diodes (40) capable of emitting a complementary second colour, all of these diodes being positioned on a common support plate (6), notably alternately.

8. Light module according to Claim 1, **characterized in that** the first (2; 102) and second (4; 104) emission means are formed respectively by a plurality of light-emitting diodes capable of emitting a light of a first colour and by a plurality of light-emitting diodes capable of emitting a light of a complementary second colour, all of these diodes being joined pairwise to form bi-chip light-emitting diodes, in which one chip for the emission of the first colour and one chip for the emission of the second colour are encapsulated in a same package.

9. Light module according to one of Claims 1 to 8, **characterized in that** the input face (10) is common to the two emission means (2, 4).

10. Light module according to one of Claims 1 to 8, **characterized in that** the optical guide (108) bears two distinct input faces (110), each being respectively associated with one of the two emission means (102, 104).

11. Light module according to one of Claims 1 to 10, **characterized in that** it comprises a control module adapted to send an instruction to switch on and switch off the second emission means (4; 104), to produce or not produce the combination of the colours in said module.

12. Motor vehicle, in which a light module according to one of Claims 1 to 11 is installed for the lighting and/or the signalling of the motor vehicle.

**Fig. 1**

**Fig. 2**

**Fig.3**

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013221743 A1
- EP 2161494 A
- DE 102008025397 A1
- DE 102012202508 A1
- DE 102012211284 A1